# EUROPÄISCHE PATENTANMELDUNG

(11) **EP 1 101 900 A1**
(43) Veröffentlichungstag der Anmeldung: **23.05.2001**
(21) Anmeldenummer: 99122756.2
(22) Anmeldetag: 16.11.1999
(51) Int. Cl.: F01D 5/18

(54) **Turbinenschaufel und Verfahren zur Herstellung einer Turbinenschaufel**

(71) Anmelder: SIEMENS AKTIENGESELLSCHAFT, 80333 München (DE)
(72) Erfinder: Liebe, Roland, Dr., 40789 Monheim (DE); Walz, Günther, Dr., 45473 Mülheim (DE); Hoell, Harald, 63607 Wächtersbach (DE)

(57) **Zusammenfassung**

Um eine Turbinenschaufel (1), die zumindest über einen Teilumfang des Schaufelblattbereichs (7) Radialbohrungen (14) aufweist, die vom kühlfluid (9) durchströmt sind, so auszubilden, daß sie eine auf lokale Anforderungen abgestimmte Kühlung und zugleich eine lange Lebensdauer besitzt, wird vorgeschlagen, daß die Kühlungswirkung der Radialbohrungen (14) beeinflussende Kanal- und/oder Strömungsparameter nach Maßgabe des Verlaufs der externen Wärmeübergangszahl (WZₑₓ) an der Außenwand (2) und des Verlaufs der internen Wärmeübergangszahl (WZᵢₙₜ) an der Innenseite (15) der Radialbohrungen (14) in vorbestimmter Weise variiert sind.

## Beschreibung

Die Erfindung betrifft eine Turbinenschaufel, insbesondere eine Gasturbinenschaufel nach dem Oberbegriff des Anspruchs 1 sowie ein Verfahren zur Herstellung einer Turbinenschaufel nach dem Oberbegriff des Anspruchs 25.

Es ist bereits bekannt, Turbinenschaufeln intern mittels eines Kühlfluids zu kühlen, indem das Kühlfluid durch einen mäanderförmigen Kanalaufbau innerhalb der Turbinenschaufel hindurchgeleitet wird und auf seinem Weg Wärme mit sich hinwegführt. Dabei sind bei besonders hohen Temperaturbelastungen in der Außenwand des Schaufelblattbereichs Radialbohrungen angebracht, durch die das Kühlfluid mit hohem Druck hindurchgepreßt wird. Im allgemeinen weisen jedoch diese Radialbohrungen lediglich genormte Abstände und Querschnitte auf, so daß es trotz eines hohen Kühlmittelverbrauchs zu inhomogen verteilten Beschädigungen der Außenseite der Außenwand durch hohe Temperaturen bzw. Temperaturgradienten aufgrund des Außen anströmenden Heißgases kommt.

Aufgabe der vorliegenden Erfindung ist es daher, eine Turbinenschaufel anzugeben, die eine auf lokale Anforderungen abgestimmte Kühlung und zugleich eine lange Lebensdauer besitzt.

Erfindungsgemäß wird dies dadurch erreicht, daß die Kühlungswirkung der Radialbohrungen beeinflussende Kanal- und/oder Strömungsparameter nach Maßgabe des Verlaufs der externen Wärmeübergangszahl an der Außenkontur der Außenwand und des Verlaufs der internen Wärmeübergangszahl an der Innenseite der Radialbohrungen so variiert sind, daß vorbestimmte Temperaturschwellenwerte an der Außenwand und/oder vorbestimmte Temperaturgradienten über der Außenwand nicht überschritten werden.

Die externe Wärmeübergangszahl gibt an, wieviel Wärme lokal pro Zeit- und Flächeneinheit in die Schaufelaußenwand eingebracht wird. Die interne Wärmeübergangszahl gibt an, wieviel Wärme lokal pro Zeit- und Flächeneinheit vom Kühlfluid aus der Schaufelaußenwand aufgenommen wird. Indem die Anordnung der Radialbohrungen speziell auf die lokalen Unterschiede der externen Wärmeübergangszahl an der Außenwand und der internen Wärmeübergangszahl an der Innenseite der Radialbohrungen abgestimmt ist, wird erreicht, daß mit geringem Kühlmittelverbrauch eine optimale Kühlwirkung erhalten wird. Der Schaufelblattbereich wird in jedem Teil seines Umfangs so gekühlt, daß dort keine Beschädigungen zu erwarten sind. Diese individuell abgestimmte Kühlung wird mit minimalem Aufwand, lediglich durch eine spezielle Anordnung der Radialbohrungen erreicht. Dadurch, daß die vorbestimmten Temperaturgradienten durch die Einstellung von Kanal- und Strömungsparametern eingehalten werden können, werden Spannungen innerhalb der Außenwand vermieden. Neben der Anordnung der Kanäle bzw. der Einstellung der Kanalparameter ist es darüber hinaus vorteilhaft, die Strömungseigenschaften des Kühlfluids innerhalb der verschiedenen Radialbohrungen individuell auf die Anforderung in dem Teilbereich des Umfangs des Schaufelblattbereichs abzustimmen. Hierdurch kann auch im Nachhinein, nach der Herstellung der Turbinenschaufel noch eine angepaßte Einstellung des Kühlmittelverbrauchs erfolgen, ohne daß aufwendige Vorrichtungen nötig wären.

Vorteilhaft ist es insbesondere, wenn die Kanalparameter Abstände der Radialbohrungen zur Außenkontur und/oder gegenseitige Abstände der Radialbohrungen und/oder Querschnitte der Radialbohrungen sind und/oder daß die Dicke der Außenwand variiert ist. Durch eine auf die Wärmeübergangszahl abgestimmte Einstellung dieser Kanalparameter lassen sich die Temperaturschwellenwerte und Temperaturgradienten an der Außenwand einstellen. Diese Kanalparameter lassen sich beim Herstellungsverfahren, insbesondere beim Guß mit einem geringen Aufwand einstellen. Durch die Variation der Dicke der Außenwand wird die Wärmeleitung durch die Außenwand bedarfsgerecht lokal vergrößert oder verrindert.

Wenn der Strömungsparameter die Strömungsgeschwindigkeit des Kühlfluids in den Wandkanälen ist, läßt sich dieser Parameter auch ohne weiteres nachträglich, d.h. nach der Herstellung der Turbinenschaufel noch verändern. Die Strömungsgeschwindigkeit kann über Strömungswiderstände, hydraulische Widerstände, den individuellen Bedürfnissen in der Außenwand der Turbinenschaufel angepaßt werden. Der Strömungswiderstand kann für verschiedene Radialbohrungen unterschiedlich sein, womit je nach Kühlungsbedarf eine größere oder kleinere Strömungsgeschwindigkeit erzeugt wird. Dies ist insbesondere auch hilfreich, wenn durch Serienfertigung ähnlich hergestellte Modelle auf unterschiedliche äußere Bedingungen eingestellt werden sollen.

Im Innenraum strömt insbesondere auch noch ein Teil des Kühlfluids, wodurch auch eine weitere Kühlwirkung erzeugt wird. Dieses kann dadurch ausgenutzt werden, daß die Kanal-und/oder Strömungsparameter nach der internen Wärmeübergangszahl an der Innenseite der Außenwand variiert werden. Auf diese Weise wird das Strömungsfluid mehrfach ausgenutzt, und somit die gesamte Kühlmittelmenge reduziert. Diese wird insbesondere auch noch bei einer Variation der Dicke der Außenwand beeinflußt, weil sich dadurch, wie oben dargestellt, die Wärmeleitung von der Außenkontur der Außenwand zur Innenseite der Außenwand verändert.

Eine gut bestimmbare Kühlwirkung wird erreicht, wenn die Außenwand einschichtig ist und aus Metall besteht. Wenn die Kanal- und Strömungsparameter erfindungsgemäß optimal eingestellt sind, ist es aus thermischen Gründen ohne weiteres möglich, die Außenwand ohne eine zusätzliche keramische Schutzschicht auszubilden, da die vorbestimmten Temperaturschwellenwerte und vorbestimmte Temperaturgradienten nicht überschritten werden. Dies verringert die Herstellungskosten enorm und setzt die Lebensdauer der Turbinenschaufel stark herauf.

Ein Korrosions- und Oxidationsschutz wird erreicht, wenn die Außenwand mehrschichtig aufgebaut ist, außen eine dünne keramische Schutzschicht und innen eine Metallwand besitzt, die Radialbohrungen aufweist, und daß derjenige Temperaturgradient maßgeblich ist, der zwischen der Außenseite und der Innenseite der Metallwand anliegt. Je dünner die keramische Schutzschicht ausgebildet ist, desto gleichmäßiger und besser ist sie beim Herstellungsvorgang auf das Schaufelmaterial aufzubringen und desto größer ist die Schaufellebensdauer. Dadurch, daß die Radialbohrungen so angeordnet sind, daß vorbestimmte Temperaturschwellenwerte nicht überschritten werden, und derjenige Temperaturgradient maßgeblich ist, der zwischen der Außenseite und Innenseite der Metallwand anliegt, wird ein geringes Temperaturniveau erreicht, und somit nahezu keinerlei oder lediglich unwesentliche temperaturbedingte Spannungen erzeugt, so daß es möglich ist, eine dünne keramische Schutzschicht auf die Metallwand aufzubringen, wobei diese Schutzschicht im wesentlichen oxidations- und korrosionshemmende Aufgaben hat, weil die Temperatur bereits durch die speziell angeordneten Radialbohrungen eingehalten wird. Somit werden die Herstellungskosten verringert und die Lebensdauer der Turbinenschaufel heraufgesetzt.

Wenn der Temperaturschwellenwert und/oder vorbestimmte Temperaturgradienten auf der gesamten Außenwand nicht überschritten werden, ist eine Haftung einer keramischen Schicht auf der gesamten Oberfläche sicher gewährleistet bzw. eine Schädigung der Außenwand verhindert. Auf diese Weise wird die Lebensdauer der Turbinenschaufel stark heraufgesetzt.

Wenn der Temperaturschwellenwert und der Temperaturgradient kritischen werkstoff- oder spannungsabhängigen Werten entsprechen, ist es möglich, die keramische Schutzschicht vollständig wegzulassen, wenn die Temperaturschwellenwerte den kritischen Werten der Werkstoffe der Außenwand entsprechen. Das Weglassen der Schutzschicht verringert die Herstellungskosten beträchtlich. Auch bei einer hohen Spannungsbelastung, beispielsweise bei Laufschaufeln durch die Fliehkräfte, eine hohe Lebensdauer gegeben, weil die erreichten Temperaturen so niedrig sind, daß in dem Zusammenspiel von lokaler Spannung und lokaler Temperatur keine schädigenden Werte erreicht werden.

Zur Verwirbelung des Aktionsfluids und Verbesserung der Stabilität ist es vorteilhaft, wenn im Hohlraum ein Feld aus Rippen an der Innenseite der Außenwand vorgesehen ist. Die Rippen können verschiedene Anordnungen besitzen, insbesondere ermöglicht eine quer zur Strömungsrichtung angeordnete Rippe eine starke Verwirbelung des Strömungsfluids, wodurch die Kühlwirkung des Kühlfluids verbessert wird. Das Kühlfluid besitzt eine besonders gute Kühlwirkung, wenn es mit einem hohen Druck durch die Kühlkanäle gepreßt wird. Dies bringt jedoch zugleich eine hohe Belastungen der Turbinenschaufel durch innere Spannungen mit sich, die durch die Rippen aufgefangen werden. Durch die Rippen kann unter Beibehaltung der Stabilität die Dicke der Außenwand verringert werden. Dies reduziert den Materialaufwand und somit das Gewicht der Schaufel, wodurch die Fliehkraftbelastung des Turbinenrads vermindert wird. Zudem ist die Kühlwirkung durch die Wand hindurch verbessert, wodurch die vorbestimmten Temperaturschwellenwerte beziehungsweise -gradienten mit geringem Aufwand einhaltbar sind.

Wenn die Radialbohrungen einen runden Querschnitt haben, ist die Berechnung der Kühlmittel und die Herstellung der Radialbohrungen erleichtert. Die Herstellung kann so beispielsweise vorzugsweise einfach durch Einsetzen von länglichen, runden Gußkernen aber auch durch Bohren erfolgen. Ein runder Querschnitt ermöglicht eine gleichmäßige Kühlwirkung entlang der Innenseite der Radialbohrungen.

Wenn die im Bereich der Vorderkante der Turbinenschaufel gelegenen Radialbohrungen größere Querschnitte aufweisen als in anderen Bereichen der Außenwand, ist in diesem Bereich die Wärmestromdichte am kleinsten, insbesondere kleiner als im Bereichen mit vielen kleinen Radialbohrungen. In diesem Bereich ist lediglich eine geringere Kühlung notwendig, und durch die Anordnung von größeren Radialbohrungen ist die Stabilität der Außenseite in diesem Bereich verbessert.

Die Herstellung der Radialbohrungen ist vereinfacht, wenn die Durchmesser benachbarter, in einem Außenwandabschnitt angeordneter Radialbohrungen oder aller Radialbohrungen gleich groß ausgebildet sind. Die Einhaltung der Temperaturschwellenwerte und Temperaturgradienten kann dann beispielsweise durch eine Anpassung der Abstände der Radialbohrungen von der Außenkontur und der Abstände der Radialbohrungen untereinander erfolgen.

Besonders günstige Temperaturverhältnisse und eine einfache Herstellung ist gewährleistet, wenn die Dicke der Außenwand zwischen annähernd 5,5 mm und annähernd 7 mm beträgt und die Durchmesser der Radialbohrungen zwischen annähernd 2,5 mm und 4 mm betragen.

Vorzugsweise betragen die Durchmesser der Radialbohrungen annähernd 3,5 mm. Die Durchmesser so groß, daß sie im Gußverfahren hergestellt werden können, was die Herstellung vereinfacht. Andererseits ist der Durchmesser noch klein genug, um eine ausreichende Kühlung zu gewährleisten.

Wenn die Abstände der Radialbohrungen zur Außenkontur zwischen annähernd 1,5 mm und 2,5 mm betragen, ist ein den Ausschuß vermindernder Toleranzbereich für die Herstellung im Gußverfahren gegeben und zugleich können die Temperaturschwellenwerte und die Temperaturgradienten durch eine angepaßte Variation der Abstände im angegebenen Bereich sichergestellt werden. Dies ist gegenüber dem Stand der Technik ein wesentlich vergrößerter Abstand, der zur Stabilität der Schaufel maßgeblich beiträgt. Durch die Verminderung des Ausschusses werden zugleich die Herstellungskosten gesenkt.

Eine Anpassung der benötigten Kühlwirkung ist nach der Herstellung der Turbinenschaufel dadurch möglich, daß die Strömung mit hydraulischen Widerständen einstellbar ist. Dies ermöglicht einerseits, Herstellungsungenauigkeiten bei der Einstellung der Abstände zur Außenkontur oder der Abstände der Radialbohrungen zueinander auszugleichen. Andererseits ist es möglich, dasselbe Turbinenschaufelmodell mit geringen Kosten an verschiedene äußere Bedingungen, insbesondere unterschiedliche Betriebstemperaturen, anzupassen.

Der gesamte Kühlfluiddruckverlust in der Schaufel ist minimiert, wenn mehrere benachbarte Wandströmungsabschnitte gruppenweise in einem Außenwandabschnitt parallel von Kühlfluid durchströmt sind. Diese Gruppen von Kanälen werden dann in Serie von Kopf- zum Fußbereich und umgekehrt vernetzt, so daß benachbarte Gruppen von parallel durchströmten Radialbohrungen seriell vom Kühlfluid durchströmbar sind. Auf diese Weise wird das Kühlfluid mit einem geringen Druckverlust durch die Turbinenschaufel geleitet, so daß es nach dem Auslaß aus der Turbinenschaufel weiter genutzt werden kann bzw. lediglich geringe Druckverluste ausgeglichen werden müssen.

Zur Verhinderung der Oxidation innen im Hohlraum ist es vorteilhaft, wenn der Hohlraum mit einer Aluminisierungsschicht versehen ist. Diese Aluminisierungsschicht kann auch in den unterschiedlich angeordneten Radialbohrungen leicht angebracht werden und sichert somit die Lebensdauer der Turbinenschaufel, ohne die Einstellung der Temperaturschwellenwerte oder Temperaturgradienten negativ zu beeinflussen, da die Aluminisierungsschicht die Wärme gut auf das Kühlfluid überträgt.

Eine sparsame Nutzung des Kühlfluids ist möglich, wenn das Kühlfluid in einem geschlossenen Kreislauf der Turbinenschaufel geführt wird. Auf die Weise kann das Kühlfluid nach dem Durchströmen der Turbinenschaufel noch für weitere Turbinenschaufeln benutzt werden oder wieder in den Durchflußkreislauf zurückgeführt werden und für andere Aufgaben, beispielsweise einer Nutzung der herausgeführten Restwärme vorgesehen sein.

Eine leicht zu überwachende Vorrichtung ist dadurch gegeben, daß der Einlaß und der Auslaß des Kühlfluids in einem Fußbereich der Turbinenschaufel angeordnet sind und der Kopf- und der Fußbereich der Turbinenschaufel zugleich mit dem Kühlfluid des Schaufelblattbereichs gekühlt wird. Bei einer Leitschaufel, die an eine äußere Wand der Turbine angebracht ist, kann die Kühlfluidversorgung von außen eingestellt und kontrolliert werden. Bei einer Laufschaufel, die mit ihrem Fuß an ein Rad, das sich um die Turbinenachse dreht, angebracht ist kann die Zuführung und die Ableitung des Kühlfluids somit durch das Rad geschehen und im Bedarfsfall mehrere Turbinenschaufeln gleichzeitig versorgt werden. Der Einlaß und der Auslaß können auf diese Weise nicht so leicht beschädigt werden.

Es ist vorteilhaft, wenn der Hohlraum in Richtung von der Druckseite zur Saugseite in Längsrichtung der Turbinenschaufel von Innenwänden durchzogen ist, wobei die Innenwände an die druckseitige bzw. saugseitige Außenwand unter kontinuierlichem Verlauf an den kontinuierlichen Verlauf der Dicke der Außenwand angeschlossen sind. Die Innenwände stabilisieren den Schaufelblattbereich der Turbinenschaufel, was insbesondere bei einem Einsatz von Hochdruckkühlfluid, insbesondere Hochdruckdampf wichtig ist. Durch die Innenwände und die dadurch entstehenden Kühlkanäle wird der Kühlfluidströmungsweg verlängert und somit die Kühlwirkung des Kühlfluids besser ausgenutzt. Durch die kontinuierliche Anpassung der Innenwände an die Außenwand der Turbinenschaufel werden Spannungsspitzen vermieden, die zu einer Zerstörung der Turbinenschaufel führen können. Durch die zusätzliche Kühlwirkung der Kühlkammern wird darüber hinaus die Anzahl der Radialbohrungen minimiert. Diese verringert die Herstellungskosten.

Eine optimale Ausnutzung des Kühlfluids wird erreicht, wenn im Kopf- und/oder im Fußbereich Prallkühleinsätze mit nach außen gerichteten Prallkühlbohrungen vorhanden sind, die mit Abstand von den Außenwänden des Kopf- und Fußbereichs angeordnet sind, die vom Kühlfluid durchströmt sind, und die von auf der Innenseite der Kopf- oder Fußaußenwände und/oder von auf Rippen angebrachten Abstandshaltern gehalten sind. Durch die Prallkühleinsätze kann selbst ein Kühlfluid, das lediglich mit geringem Druck durch die Schaufel gepreßt wird, eine sehr gute Kühlwirkung erzielen. Der Einsatz der Prallkühleinsätze in den Kopf- und Fußbereich erfolgt nach dem Guß und der Fertigstellung der Turbinenschaufel und kann somit auf individuelle Anforderungen eingestellt werden.

Ein besonders gut verfügbares Kühlfluid in einer Dampfturbine liegt vor, wenn das Kühlfluid Dampf ist.

Wenn der Dampf ein Hochdruckdampf ist, besitzt er gegenüber Dämpfen mit niedrigen Drücken stark verbesserte Kühleigenschaften, so daß die Turbinenschaufel, die durch Hochdruckdampf gekühlt ist, höheren Außentemperaturen standhalten kann. Hochdruckdampf ist gekennzeichnet durch einen Eintrittsdruck von 100 bar und eine Eintrittstemperatur von 360°C. Die Radialbohrungen sind mit ihren Durchmessern dahingehend ausgelegt, daß sie dem starken Druck standhalten. Insbesondere die Abstände der Radialbohrungen zur Außenkontur der Außenwand sind erfindungsgemäß so eingestellt, daß sie einerseits eine ausreichende Kühlwirkung erzielen, das heißt den Temperaturschwellenwert und Temperaturgradienten einhalten, und andererseits die Stabilität der Schaufel durch den unter starkem Druck hindurchgepreßten Hochdruckdampf nicht gefährdet ist.

Die auf ein Verfahren zur Herstellung einer Turbinenschaufel gerichtete Aufgabe wird dadurch gelöst, daß der mehrteilige Gußkern längliche Kernteile zur Herstellung von Radialbohrungen aufweist, die so angeordnet werden, daß die Kühlungswirkung der Radialbohrungen beeinflussende Kanal- und/oder Strömungsparameter nach Maßgabe des Verlaufs der externen Wärmeübergangszahl an der Außenkontur der Außenwand und des Verlaufs der internen Wärmeübergangszahl an der Innenseite der Radialbohrungen so variiert sind, daß vorbestimmte Temperaturschwellenwerte an der Außenwand und/oder vorbestimmte Temperaturgradienten über der Außenwand nicht überschritten werden. Die Herstellungsweise mit mehreren längeren Kernteilen zur Herstellung der Radialbohrungen ist deswegen vorteilhaft, weil die gesamten Kühlkanäle der Turbinenschaufeln in einem Herstellungsvorgang erzeugt werden können und nicht noch durch nachträgliche Maßnahmen eingebracht werden müssen. Die Kanalparameter, die beeinflußt werden können, um nach Maßgabe der Wärmeübergangszahlen die vorbestimmten Temperaturschwellenwerte und/oder Temperaturgradienten einzuhalten, können durch die Positionierung der länglichen Kernteile leicht und reproduzierbar eingestellt werden. Bei der Positionierung der Kernteile läßt sich sowohl der Abstand der Kernteile untereinander, das heißt der Radialbohrungen, wie auch der Abstand der Kernteile zum äußeren Kernmantel, daß heißt bei dem fertigen Gußteil der Abstand der Radialbohrungen zur Außenkontur der Außenwand je nach Bedarf einstellen.

Das erfindungsgemäße Verfahren läßt es zu, daß selbst die minimalen Abstände der Wandströmungkanäle zur Außenkontur mit Toleranzen von annähernd ± 0,15 mm bis ± 0,3 mm hergestellt werden. Dies ist im Vergleich zu üblichen Feingußverfahren ein großer Toleranzbereich, der es ermöglicht, eine im Vergleich zu üblichen Verfahren größere Anzahl Turbinenschaufeln mit geringeren Kosten herzustellen und den Ausschuß zu vermindern.

Die Erfindung wird anhand der in den Figuren dargestellten Ausführungsbeispiele näher erläutert. Es zeigen:
Fig.la,b Querschnitte durch Schaufelblattbereiche von Turbinenschaufeln mit Radialbohrungen,
Fig.2 einen schematischen Schnitt durch eine mehrschichtige Außenwand,
Fig.3 eine Aufsicht auf einen Fußbereich mit Einlaß und Auslaß für das Kühlfluid,
Fig.4 einen Längsschnitt durch eine Turbinenschaufel und schematisch ein Fließschema des Kühlfluids,
Fig.5 ein Fließschema des Kühlfluid mit hydraulischen Widerständen und
Fig.6 einen schematischen Querschnitt durch eine Gußform einer Turbinenschaufel.

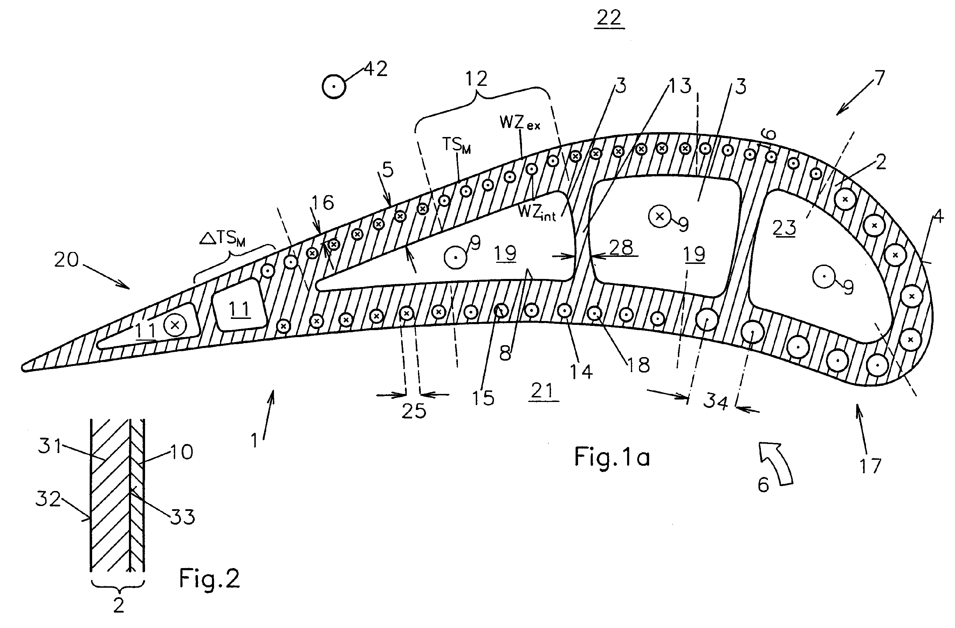

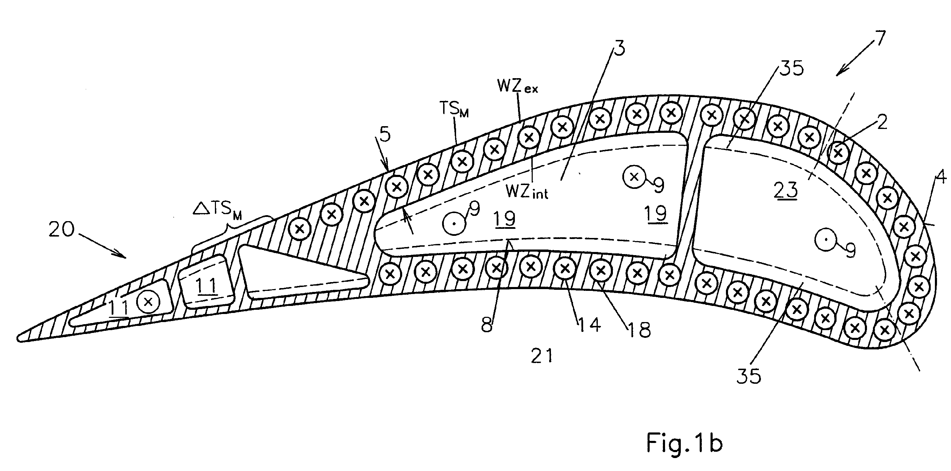

Fig.1 stellt einen Längsschnitt durch einen Schaufelblattbereich 7 einer innengekühlten Gasturbinenschaufel dar. Der Schaufelblattbereich 7 wird von einem heißen Aktionsfluid 6 an seiner Außenwand 2 angeströmt. Die Außenwand 2 umgibt einen Hohlraum 3, der aus zwei Mittelkühlkammern 19, einer Vorderkühlkammer 23 und zwei Hinterkühlkammern 11 besteht. In einem überwiegenden Bereich der Außenwand 2 sind entlang der Außenkontur 4 nebeneinander Radialbohrungen 14 annähernd parallel zur Längsachse 42 der Turbinenschaufel ausgerichtet. Die Mittelkühlkammern 19 werden parallel oder entgegengesetzt zur Längsachse 42 von einem Kühlfluid 9 ebenso wie die Hinterkühlkammern 11 und die Vorderkühlkammer 23 durchströmt. Die Radialbohrungen 14 weisen in Außenwandabschnitten 12 ähnliche Durchmesser 25 auf. Im Vorderkantenbereich 17 ist der Durchmesser 25 der runden Radialbohrungen 14 größer als in den übrigen Außenwandabschnitten 12. Hier ist eine besonders große Kühlwirkung und somit ein besonders großer Kühlfluiddurchfluß nötig. Weiterhin sind die an der Druckseite 21 der Turbinenschaufel gelegenen Radialbohrungen 14 im Durchschnitt größer ausgebildet als die auf der Saugseite 22 liegenden. Neben den verschiedenen Größen der Durchmesser 25 der Radialbohrungen 14 sind auch noch die Abstände 34 der Radialbohrungen 14 untereinander beziehungsweise die Abstände 16 der Radialbohrungen 14 zur Außenkontur 4 so ausgelegt, daß bei hindurchströmendem Kühlfluid und außen anströmendem Heißgas 6 vorbestimmte Temperaturschwellenwerte TS_{M} an der Außenwand 2 und/oder vorbestimmte Temperaturgradienten ΔTS_{M} über der Außenwand nicht überschritten werden. Die Anordnung und Größe der Radialbohrungen 14 sind um dieses zu erreichen nach der internen Wärmeübergangszahl WZᵢₙₜ beziehungsweise der externen Wärmeübergangszahl WZₑₓ eingerichtet.

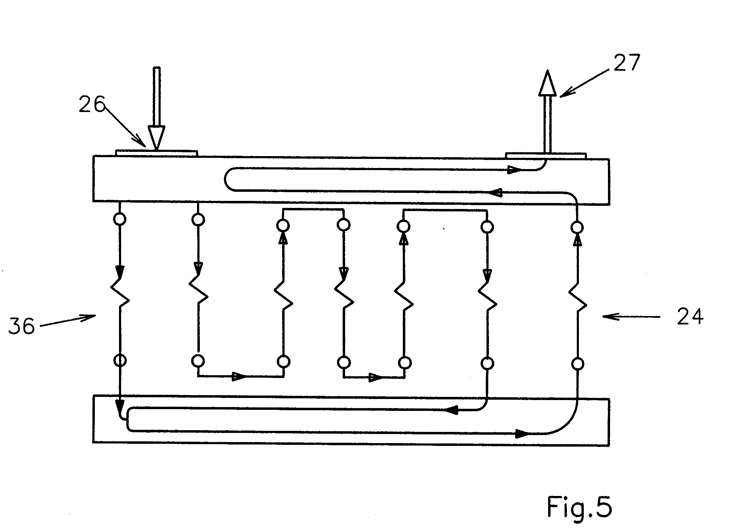

Neben den Abständen 16 der Radialbohrungen 14 zur Außenkontur 4, den gegenseitigen Abständen 34 der Radialbohrungen 14 und den Querschnitten 18 der Radialbohrungen 14 ist auch die Dicke 5 der Außenwand 2 so variierbar, daß Temperaturschwellenwerte TS_{M} an der Außenwand 2 und/oder vorbestimmte Temperaturgradienten ΔTS_{M} nicht überschritten werden. Zur Einstellung der Temperaturwerte ist es darüber hinaus möglich, als Strömungsparameter die Strömungsgeschwindigkeit des Kühlfluids 9 in den Radialbohrungen 14 einzustellen. Dies geschieht, wie in Fig.5 dargestellt, mittels hydraulischer Widerstände 24 oder durch Änderungen der Querschnitte 25 der Radialbohrungen 14 oder ähnliches. Je nach Geschwindigkeit kann das Kühlfluid 9 mehr oder weniger Wärme aufnehmen.

Dadurch, daß auch im Inneren, das heißt im Hohlraum 3 beziehungsweise den Kühlkammern 19, 11, 23 Kühlfluid 9 fließt, die interne Wärmeübergangszahl WZᵢₙₜ an der Innenseite 8 der Außenwand 2 durch die Parameter des Kühlfluids 9 beeinflußt. Je nach Stärke des Flusses in den Kühlkammern 19, 11, 23 werden somit vorteilhaft die Kanal- und/oder die Strömungsparameter der Radialbohrungen 14 variiert, um den Kühlfluiddurchfluß zu optimieren.

Die in Fig.1 dargestellte Außenwand 2 ist einschichtig und aus Metall.

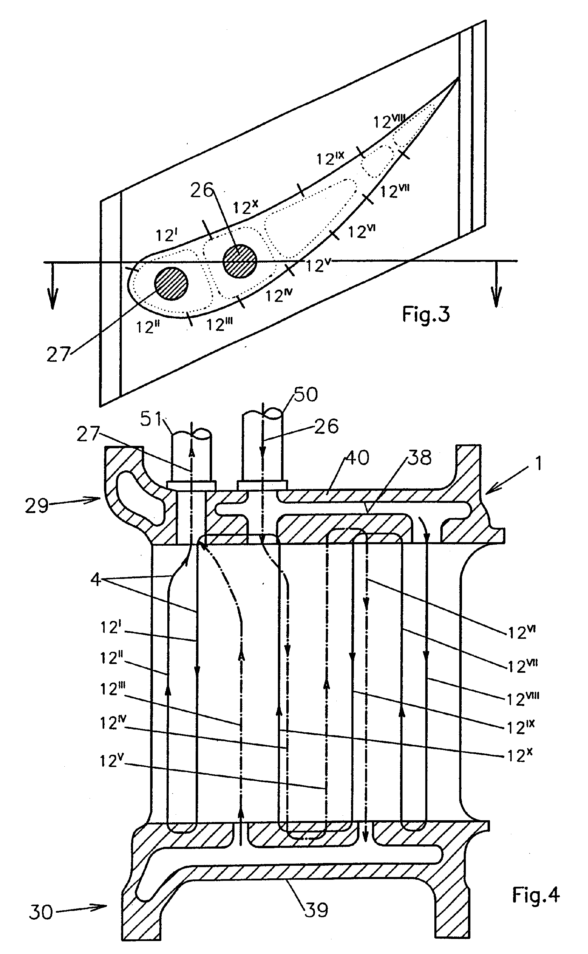

Fig.2 zeigt eine mehrschichtige Außenwand 2 aus einer Metallwand 31 und einer keramischen Schutzschicht 10 bestehend. Die Schutzschicht 10 dient der Verlängerung der Lebensdauer der Turbinenschaufel bei hohen Heißgastemperaturen. Bei optimaler Einstellung der Temperaturen unterhalb der Temperaturschwellenwerte TS_{M} beziehungsweise ein Einhaltung der Temperaturgradienten ΔTS_{M} ist es möglich, die keramische Schutzschicht 10 sehr dünn auszubilden oder sie sogar ganz wegzulassen. Eine dünn ausgebildete keramische Schutzschicht 10 dient lediglich dem Oxidations- beziehungsweise Korrosionsschutz.

Wenn eine keramische Schutzschicht 10 aufgebracht ist, ist insbesondere derjenige Temperaturgradient ΔTS_{M} maßgeblich, der zwischen der Außenseite 33 und der Innenseite 32 der Teilwand 31 anliegt, weil die Spannungen in diesem Bereich zu einem Abplatzen der keramischen Schutzschicht 10 führen können. Dies wiederum führt zu einer kurzen Lebensdauer der Turbinenschaufel.

Insbesondere, wenn der Temperaturschwellenwert TS_{M} und/oder der vorbestimmte Temperaturgradient ΔTS_{M} auf der gesamten Außenwand 2 nicht überschritten wird, es ist gewährleistet, daß eine eventuell aufgebrachte Schutzschicht 10 nicht abplatzt beziehungsweise werkstoffabhängige Schäden nicht auftreten, die zu einem Versagen der Turbinenschaufel führen könnten.

Zur Stabilisierung gegenüber starken Spannungen insbesondere durch ein hochdruckbeaufschlagtes Kühlfluid sind Rippen 35 an der Innenseite 8 der Außenwand 2 im Hohlraum 3 vorgesehen.

Fig.4 zeigt die Strömung des Kühlfluids 9 durch die Kühlkammern 19, 23, 11 und die zu Gruppen zusammengefaßten Radialbohrungen 14 in Außenwandabschnitten 12, die mit 12^{I} bis 12^{X} durchnumeriert sind. Das durch den Einlaß 26 eingetretene Kühlfluid 9 strömt zunächst durch den Fußbereich 29 in den Außenwandabschnitt 12^{IV}, dann kehrt sich die Strömungsrichtung um und das Kühlfluid 9 durchströmt die Radialbohrungen 14 in dem Außenwandabschnitt 12^{V}. Diese Außenwandabschnitte 12 finden sich auch in Fig.1 wieder, dargestellt durch Punkte beziehungsweise Kreuze in den Querschnitten 18 der Radialbohrungen 14. Die parallel durchströmten Radialbohrungen 14 sind somit zu Gruppen zusammengefaßt, die wiederum seriell vom Kühlfluid 9 durchströmt sind. Das durch den Einlaß 26 eingelassene Kühlfluid durchströmt verschiedene Kühlkammern 19, 23, 11 beziehungsweise Radialbohrungen 14, sowie den Fußbereich 29 und den Kopfbereich 30. Das Kühlfluid wird vorher oder danach durch weitere Turbinenschaufeln geleitet. Hierdurch entsteht ein geschlossener Kühlfluidkreislauf, wodurch Kühlfluid gespart wird beziehungsweise der Wirkungsgrad der Turbine erhöht wird. Außerhalb der Turbinenschaufel wird das Kühlfluid 9 wiederum entweder in andere Turbinenschaufeln oder in einem geschlossenen Kreislauf geführt.

Der Einlaß 26 und der Auslaß 27, die im Fußbereich 29 der Turbinenschaufel angeordnet sind, sind mit metallischen, flexiblen Zuleitungen 50 beziehungsweise Ableitungen 51 verbunden, so daß auch bei starken Belastungen das Kühlfluid nicht entweichen kann und ein Einbau der Turbinenschaufel erleichtert ist.

Fig.1 zeigt, daß der Hohlraum 3 in Längsrichtung der Turbinenschaufel 1 von Innenwänden 13 durchzogen ist, welche das Schaufelprofil in Richtung von der Druckseite 21 zur Saugseite 22 so durchziehen, daß mehrere Kühlkammern 11, 19, 23 entstehen, wobei die Innenwände 13 an die Druckseite 21 beziehungsweise Saugseite 22 der Außenwand 2 von unter kontinuierlichem Verlauf an den kontinuierlichen Verlauf der Dicke 5 der Außenwand 2 angeschlossen sind. Somit weisen die Vorder23, Mittel- 19 und Hinterkühlkammern 11 eine große Stabilität auf und können auch einer Beaufschlagung mit Hochdruckdampf sehr gut standhalten. Darüber hinaus ist der kontinuierliche Verlauf vorteilhaft, weil dabei keinerlei Spannungsspitzen entstehen, bei denen möglicherweise Schädigungen der Turbinenschaufel wachsen können.

An der Hinterkante 20 der Turbinenschaufel ist es insbesondere wichtig, daß die Hinterkühlkammern 11 gemäß den Anforderungen durch die interne WZᵢₙₜ und externe Wärmeübergangszahl WZₑₓ beziehungsweise den Temperaturschwellenwerten TS_{M} und den Temperaturgradienten ΔTS_{M} ausgebildet sind, damit sich dort keine zu hohen Temperaturen ausbilden, weil die Radialbohrungen 14 in diesem Bereich nicht anzubringen sind, weil die Außenwand 2 an der Hinterkante 20 zu einer "Spitze" zusammenläuft.

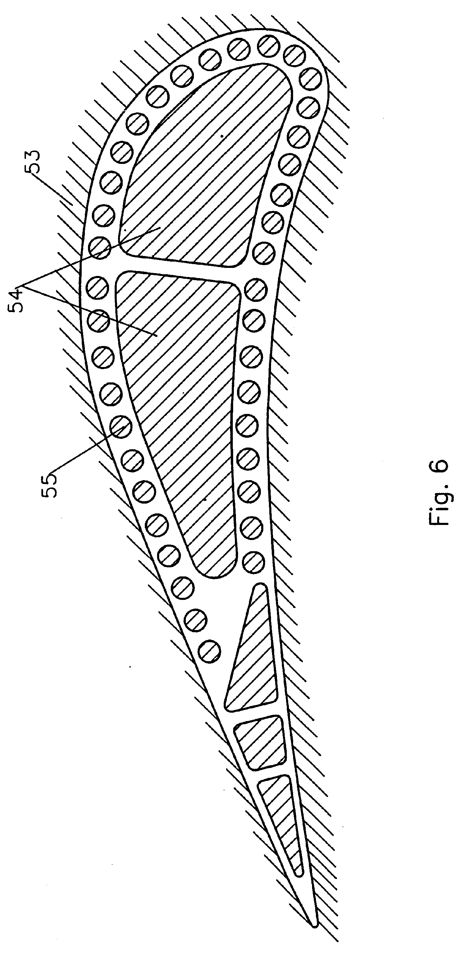

In Fig.6 ist schematisch eine mehrteilige Gußform 53 für die Herstellung einer erfindungsgemäßen Turbinenschaufel dargestellt. Der Gußkern 54 weist mehrere längliche Kernteile 55 zur Herstellung von Radialbohrungen 14 auf. Diese werden so angeordnet, daß unter Berücksichtigung der Wärmeübergangszahlen WZᵢₙₜ, WZₑₓ und der die Kühlungswirkung beeinflussende Kanalparameter vorbestimmte Temperaturschwellenwerte TSM und vorbestimmte Temperaturgradienten ΔTS_{M} der Außenwand 2 nicht überschritten werden. Mit Hilfe derartiger Gußkerne 55 ist es möglich, minimale Abstände 16 der Radialbohrungen 14 zur Außenkante 2 mit Toleranzen von annähernd ± 0,15 bis ± 0,30 mm herzustellen.

## Patentansprüche

1. Turbinenschaufel (1), insbesondere Gasturbinenschaufel, die eine von einem heißen Aktionsfluid (6) angeströmte Außenwand (2) eines Schaufelblattbereichs (7) hat, die einen bedarfsweise mehrteiligen Hohlraum (3) umgibt, der von einem Kühlfluid (9) durchströmt ist und die zumindest über einen Teilumfang des Schaufelblattbereichs (7) Radialbohrungen (14) aufweist, die ebenfalls vom Kühlfluid (9) durchströmt sind, **dadurch gekennzeichnet,** daß die Kühlungswirkung der Radialbohrungen (14) beeinflussende Kanal- und/oder Strömungsparameter nach Maßgabe des Verlaufs der externen Wärmeübergangszahl (WZₑₓ) an der Außenkontur (4) der Außenwand (2) und des Verlaufs der internen Wärmeübergangszahl (WZᵢₙₜ) an der Innenseite (15) der Radialbohrungen (14) so variiert sind, daß vorbestimmte Temperaturschwellenwerte (TS_{M}) an der Außenwand (2) und/oder vorbestimmte Temperaturgradienten (ΔTS_{M}) über der Außenwand (2) nicht überschritten werden.

2. Turbinenschaufel nach Anspruch 1, **dadurch gekennzeichnet,** daß die Kanalparameter Abstände (16) der Radialbohrungen (14) zur Außenkontur (4) und/oder gegenseitige Abstände (34) der Radialbohrungen (14) und/oder Querschnitte (18) der Radialbohrungen (14) sind und/oder daß die Dicke (5) der Außenwand (2) variiert ist.

3. Turbinenschaufel nach Anspruch 1 oder 2 **dadurch gekennzeichnet**, daß der Strömungsparameter die Strömungsgeschwindigkeit des Kühlfluids (9) in den Radialbohrungen (14) ist.

4. Turbinenschaufel nach einem der Ansprüche 1 bis 3, **dadurch gekennzeichnet,** daß die Kanal- und/oder Strömungsparameter nach der internen Wärmeübergangszahl (WZᵢₙₜ) an der Innenseite (8) der Außenwand (2) variiert werden.

5. Turbinenschaufel nach einem der Ansprüche 1 bis 4 **dadurch gekennzeichnet**, daß die Außenwand (2) einschichtig ist und aus Metall besteht.

6. Turbinenschaufel nach einem der Ansprüche 1 bis 5 **dadurch gekennzeichnet,** daß die Außenwand (2) mehrschichtig aufgebaut ist und außen eine dünne keramische Schutzschicht (10) und innen eine Metallwand (31) besitzt, die Radialbohrungen (14) aufweist, und daß derjenige Temperaturgradient (ΔTS_{M}) maßgeblich ist, der zwischen der Außenseite (33) und der Innenseite (32) der Metallwand (31) anliegt.

7. Turbinenschaufel nach einem der Ansprüche 1 bis 6, **dadurch gekennzeichnet**, daß der vorbestimmte Temperaturschwellenwert (TS_{M}) und/oder Temperaturgradient (ΔTS_{M}) auf der gesamten Außenwand (2) nicht überschritten wird/werden.

8. Turbinenschaufel nach einem der Ansprüche 1 bis 7, **dadurch gekennzeichnet**, daß der Temperaturschwellenwert (TS_{M}) und der Temperaturgradient (ΔTS_{M}) kritischen werkstoff- und/oder spannungsabhängigen Werten entsprechen.

9. Turbinenschaufel nach einem der Ansprüche 1 bis 8, **dadurch gekennzeichnet**, daß im Hohlraum (3) ein Feld aus Rippen (35) an der Innenseite (8) der Außenwand (2) vorgesehen ist.

10. Turbinenschaufel nach einem der Ansprüche 1 bis 9, **dadurch gekennzeichnet,** daß die Radialbohrungen (14) einen runden Querschnitt (18) haben.

11. Turbinenschaufel nach einem der Ansprüche 1 bis 10, **dadurch gekennzeichnet,** daß die im Bereich der Vorderkante (17) der Turbinenschaufel (1) gelegenen Radialbohrungen (14) größere Querschnitte (18) aufweisen als in anderen Bereichen der Außenwand (2).

12. Turbinenschaufel nach einem der Ansprüche 1 bis 11, **dadurch gekennzeichnet,** daß die Durchmesser (18) benachbarter, in einem Außenwandabschnitt (12) gelegener Radialbohrungen (14) oder aller Radialbohrungen (14) gleich groß ausgebildet sind.

13. Turbinenschaufel nach einem der Ansprüche 1 bis 12, **dadurch gekennzeichnet,** daß die Dicke (5) der Außenwand (2) zwischen annähernd 5,5 mm und anähernd 7 mm beträgt und die Durchmesser (25) der Radialbohrungen (14) zwischen annähernd 2,5 und 4 mm betragen.

14. Turbinenschaufel nach einem der Ansprüche 1 bis 13, **dadurch gekennzeichnet,** daß die Durchmesser (25) der Radialbohrungen (14) annähernd 3,5 mm betragen.

15. Turbinenschaufel nach einem der Ansprüche 1 bis 14, **dadurch gekennzeichnet**, daß die Abstände (16) der Radialbohrungen (14) zur Außenkontur (4) zwischen annähernd 1,5 bis 2,5 mm betragen.

16. Turbinenschaufel nach einem der Ansprüche 1 bis 15, **dadurch gekennzeichnet,** daß die Strömung mit hydraulischen Widerständen (24) einstellbar ist.

17. Turbinenschaufel nach einem der Ansprüche 1 bis 16, **dadurch gekennzeichnet,** daß benachbarte Radialbohrungen (14) in einem Außenwandabschnitt (12) gruppenweise parallel und verschiedene Gruppen seriell von Kühlfluid (9) durchströmt sind.

18. Turbinenschaufel nach einem der Ansprüche 1 bis 17, **dadurch gekennzeichnet**, daß der Hohlraum (3) mit einer Aluminisierungsschicht versehen ist.

19. Turbinenschaufel nach einem der Ansprüche 1 bis 18, **dadurch gekennzeichnet**, daß das Kühlfluid (9) der in einem geschlossenen Kreislauf der Turbinenschaufel (1) geführt wird.

20. Turbinenschaufel nach einem der Ansprüche 1 bis 19, **dadurch gekennzeichnet**, daß der Einlaß (26) und der Auslaß (27) des Kühlfluids (9) in einem Fußbereich (29) angeordnet sind und der Kopf- (30) und der Fußbereich (29) der Turbinenschaufel (1) zugleich mit dem Kühlfluid (9) des Schaufelblattbereichs (7) gekühlt wird.

21. Turbinenschaufel nach einem der Ansprüche 1 bis 20, **dadurch gekennzeichnet,** daß der Hohlraum (3) von der Druckseite (219 zur Saufseite (22) in Längsrichtung der Turbinenschaufel (1) von Innenwänden (13) durchzogen ist, wobei die Innenwände (13) an die druckseitige bzw. saugseitige Außenwand (2) unter kontinuierlichem Verlauf an den kontinuierlichen Verlauf der Dicke (5) der Außenwand (2) angeschlossen sind.

22. Turbinenschaufel nach einem der Ansprüche 1 bis 21, **dadurch gekennzeichnet**, daß im Kopf- (30) und/oder im Fußbereich (29) Prallkühleinsätze mit nach außen gerichteten Prallkühlbohrungen vorhanden sind, die mit Abstand von den Außenwänden des Kopf- (30) und Fußbereichs (29) angeordnet sind, die vom Kühlfluid (6) durchströmt sind, und die von auf einer Innenseite (38) der Kopf- oder Fußaußenwände (39, 40) angebrachten Abstandshaltern gehalten sind.

23. Turbinenschaufel nach einem der Ansprüche 1 bis 22, **dadurch gekennzeichnet,** daß das Kühlfluid (9) Dampf ist.

24. Turbinenschaufel nach einem der Ansprüche 1 bis 23, **dadurch gekennzeichnet,** daß der Dampf ein Hochdruckdampf ist.

25. Verfahren zur Herstellung einer Turbinenschaufel, insbesondere einer Gasturbinenschaufel, mit einer Außenwand (2) und einem Hohlraum (3), wobei das Verfahren ein Gußverfahren umfaßt, bei dem eine Gußform (53) verwendet wird, die einen mehrteiligen Gußkern (54) enthält zur Herstellung einer Turbinenschaufel mit den Merkmalen eines der Ansprüche 1 bis 24,
**dadurch gekennzeichnet,** daß der mehrteilige Gußkern (54) längliche Kernteile (55) zur Herstellung von Radialbohrungen (14) aufweist, die so angeordnet werden, daß die Kühlungswirkung der Radialbohrungen (14) beeinflussende Kanal- und/oder Strömungsparameter nach Maßgabe des Verlaufs der externen Wärmeübergangszahl (WZₑₓ) an der Außenkontur (4) der Außenwand (2) und des Verlaufs der internen Wärmeübergangszahl (WZᵢₙₜ) an der Innenseite (15) der Radialbohrungen (14) so variiert sind, daß vorbestimmte Temperaturschwellenwerte (TS_{M}) an der Außenwand (2) und/oder vorbestimmte Temperaturgradienten (ΔTS_{M}) über der Außenwand (2) nicht überschritten werden.

26. Verfahren nach Anspruch 25, **dadurch gekennzeichnet,** daß minimalen Abstände (16) der Radialbohrungen (14) zu Außenkanten (4) mit Toleranzen von annähernd ± 0,15 bis ± 0,3 mm hergestellt werden.
